**Europäisches Patentamt**

**European Patent Office**

**Office européen des brevets**

(19)

(11) Veröffentlichungsnummer: **0 243 421 B1**

(12) **EUROPÄISCHE PATENTSCHRIFT**

(45) Veröffentlichungstag der Patentschrift:
27.03.91 Patentblatt 91/13

(51) Int. Cl.$^5$: **C03C 3/247**

(21) Anmeldenummer: 86906273.7

(22) Anmeldetag: 24.10.86

(86) Internationale Anmeldenummer:
PCT/DE86/00428

(87) Internationale Veröffentlichungsnummer:
WO 87/02656 07.05.87 Gazette 87/10

(54) OPTISCHES FLUORPHOSPHATGLAS MIT ANOMALER POSITIVER TEILDISPERSION UND VERFAHREN ZU SEINER HERSTELLUNG.

(30) Priorität : 26.10.85 DE 3538491
18.10.86 DE 3635445

(43) Veröffentlichungstag der Anmeldung :
04.11.87 Patentblatt 87/45

(45) Bekanntmachung des Hinweises auf die
Patenterteilung :
27.03.91 Patentblatt 91/13

(84) Benannte Vertragsstaaten :
AT BE CH DE FR GB IT LI NL

(56) Entgegenhaltungen :
FR-A- 2 306 174
US-A- 4 213 788
CHEMICAL ABSTRACTS, vol. 103, no. 10, 9
September 1985, Columbus, Ohio (US) see
page 255, abstract 75254q & JP, A, 6081042
(OHARA OPTICAL GLASS MFG. CO.LTF) 9
May 1985

(73) Patentinhaber : Leica Industrieverwaltung
GmbH
Ernst-Leitz-Strasse 30 Postfach 20 20
W-6330 Wetzlar 1 (DE)

(72) Erfinder : MEINERT, Norbert
Am Sportfeld 5
W-6336 Solms-Albshausen (DE)
Erfinder : HUBER, Werner
Bahnhofstr. 16
W-6336 Solms-Albshausen (DE)
Erfinder : DREUTH, Rainer
Schulstr. 16
W-6330 Wetzlar-Niedergirmes (DE)
Erfinder : FRANEK, Henning
Mühlenkopfstr. 5
W-6333 Braunfels-Tiefenbach (DE)

## Beschreibung

Die Anmeldung betrifft ein optisches Fluorphosphatglas mit anomaler positiver Teildispersion auf der Basis von Erdalkalimetaphosphaten, Aluminiummetaphosphat, Erdalkalifluoriden, Aluminiumfluorid und Erdalkalioxiden sowie ein Verfahren zu dessen Herstellung.

Für viele Zwecke werden im optischen Präzisionsgerätebau Gläser verwendet, die neben bewährten optischen Parameter-Kombinationen ($n_e/v_e$-Parameterpaare) und anomalen Teildispersions-Werten auch im Bereich ihrer anderen physiko-chemischen Eigenschaften extreme Werte aufweisen. Dabei ist es die Aufgabe des Glas-Chemikers, optische Gläser zu entwickeln, bei denen eine möglichst große Anzahl aller weiteren physikalischen Eigenschaften in vorgegebener Weise optimiert sind, ohne die bereits bewährten optischen Parameter nachteilig zu beeinflussen bzw. abzuändern. Da es sich bei einer modernen optischen Glas-Rezeptur um ein Vielkomponenten-System handelt, stellt jede nachweisbare bzw. meßbare Verbesserung von Einzelparametern einen weiteren werkstoffspezifischen Optimierungsschritt dar.

Aus der JP-A-6 081042 sind optische Fluorphosphatgläser (vgl. die Beispiele 8 und 10) mit vergleichbaren Brechzahlen bekannt. Allerdings liegen die umgerechneten $v_e$-Werte unterhalb des beanspruchten Minimalwertes von $v_e = 75,8$, so daß insgesamt eine abweichende "optische Lage" im n--Diagramm resultiert. Hinsichtlich des Chemismus ergaben sich weitere Abweichungen. So ist der Gesamtgehalt aller Erdalkalien wie auch der Einzelgehalt von Mg, Sr und Ba (nach Umrechnung) deutlich geringer als bei den erfindungsgemäßen Gläsern ; andererseits sind die P- und O-Anteile dieser bekannten Gläser wesentlich größer. Auch die F/O- und die F/P-Anteile sind bei diesem Stand der Technik wesentlich geringer. Über physiko-chemische Parameter werden darüber hinaus keine Angaben gemacht.

Es ist daher die Aufgabe der vorliegenden Erfindung, ein derartiges optisches Glas bereitzustellen, bei dem unter Beibehaltung seiner extremen optischen Daten (Brechzahl, Abbe-Wert, anomale Teildispersion) die physiko-chemischen Eigenschaften dieses Glases sowie seine technologischen Herstellungsbedingungen so verbessert werden, daß eine reproduzierbare großtechnische Herstellung ohne Schwierigkeiten möglich ist und daß das so erhaltene Glas insbesondere schlieren- und blasenfrei in großen Einheiten hergestellt werden kann.

Diese Aufgabe wird bei einem optischen Fluorphosphatglas auf der Basis von Metaphosphaten und Fluoriden der Erdalkalien und des Aluminiums sowie von Erdalkalioxiden mit Brechzahlen $n_e$ zwischen 1,515 und 1,546, Abbe-Werten $v_e$ zwischen 75,8 und 77,4 sowie positiven anomalen Teildispersionswerten $+\Delta v_e$ zwischen 14,85 und 15,15 erfindungsgemäß dadurch gelöst, daß es folgende elementare Zusammensetzung (in Gew.-%) aufweist : Magnesium (Mg) : 2,4 bis 2,7 ; Kalzium (Ca) : 4,5 bis 4,9 ; Strontium (Sr) : 15,9 bis 17,6 ; Barium (Ba) : 20,2 bis 22,3 ; Aluminium (Al) : 5,6 bis 6,2 ; Phosphor (P) : 8,8 bis 9,7 ; Fluor (F) : 22,0 bis 24,3; Sauerstoff (O) : 15,7 bis 17,4. Die Aufgabe wird alternativ durch ein Verfahren zur Herstellung eines derartigen Fluorphosphatglases gelöst, und zwar durch Erschmelzen eines Gemenges, das folgende Zusammensetzung in Gew.-% aufweist : Magnesiummetaphosphat ($Mg(PO_3)_2$) : 0,5 bis 1 ; Kalziummetaphosphat ($Ca(PO_3)_2$) : 1 bis 2 ; Bariummetaphosphat ($Ba(PO_3)_2$) : 21 bis 24 ; Aluminiummetaphosphat ($Al(PO_3)_3$) : 10 bis 12, wobei der Gesamtgehalt aller Metaphosphate zwischen 33 und 38 beträgt ; Magnesiumfluorid ($MgF_2$) : 6 bis 7 ; Kalziumfluorid ($CaF_2$) : 8 bis 10 ; Strontiumfluorid ($SrF_2$) : 15 bis 18 ; Aluminiumfluorid ($AlF_3$) : 14 bis 16, wobei der Gesamtgehalt aller Fluoride zwischen 43 und 51 beträgt ; Bariumoxid (BaO) : 11 bis 13 ; Strontiumoxid (SrO): 5 bis 7, wobei der Gesamtgehalt aller Oxide zwischen 16 und 20 beträgt.

Weitere Ausgestaltungen der vorliegenden Erfindung ergeben sich aus den Unteransprüchen.

In der folgenden Tabelle sind die optischen und die physiko-chemischen Eigenschaften eines bekannten Glases und daneben diejenigen Eigenschaften des erfindungsgemäßen Glases gegenübergestellt.

| bekanntes Glas | Parameter | erfindungsgemäßes Glas |
|---|---|---|
| 1,5302 | $n_e$ | 1,5302 |
| 76,6 | $\nu_e$ | 76,6 |
| 0,4795 | $\vartheta'_g$ | 0,4795 |
| +15 | $\Delta\nu_e$ | +15 |
| 14,80 | $\alpha_{20/300}$ °C $[10^{-6} \cdot 1/°C]$ | 14,18 |
| 488 | $T_g$ [°C] | 501 |
| 3,97 | $\varrho$ [g/cm³] | 3,78 |
| 340 | HK | 385 |
| 1 | FR | 1-2 |
| 51 | SR | 51 |

Die ersten vier angegebenen Parameter bezeichnen optische Eigenschaften und bedeuten :

$n_e$ = Brechzahl

$\nu_e$ = Abbe-Zahl (Reziprok-Wert der Dispersion)

$\vartheta'_g$ = (eigentliche) anomale Teildispersion, wobei gilt :

$$\vartheta'_g = \frac{n_g - n_{F'}}{n_{F'} - n_{C'}} \quad ,$$

dabei bedeuten die tiefgestellten Indizes

g = blaue Quecksilberlinie (435,84 nm) ;

F' = blaue Cadmiumlinie (479,99 nm) ;

C' = rote Cadmiumlinie (643,85 nm) ;

+ $\Delta\nu_e$ = positive Abweichung von der "Normalgeraden", wie sie beispielsweise in der Zeichnung der DE-C 14 96 563 bzw. der korrespondierenden US-A 34 51 829 graphisch und im zugehörenden Text erläutert dargestellt wurde. Dieser Differenzbetrag wird als "positiver" anomaler Teildispersionswert bezeichnet.

Die unteren sechs Parameter bezeichnen physiko-chemische Eigenschaften, und zwar :

$\alpha_{20/300}$°C = linearer thermischer Ausdehnungskoeffizient $[10^{-6} \cdot 1/°C]$

$T_g$ = Transformationstemperatur [°C]

$\varrho$ = Dichte [g/cm³]

HK = Knoop-Härte

FR = Flecken-Resistenz

SR = Säure-Resistenz.

Aus der Zusammenstellung ergeben sich deutlich die verbesserten Eigenschaften bei gleichbleibenden optischen Lage-Parametern. Das in der Tabelle aufgeführte erfindungsgemäße Glas besteht (in Gew.-%) aus 2,57 Mg, 4,69 Ca, 16,75 Sr, 21,22 Ba, 5,90 Al, 9,22 P, 23,13 F und 16,52 O. Es kann in modernen Teleobjektiven sowie in lichtstarken Weitwinkelobjektiven eingesetzt werden.

Nachfolgend wird die Durchführung einer 10 kg-Schmelze beschrieben. Eine Gemenge-Einwaage von :

| | |
|---|---|
| $Mg(H_2PO_4)_2 \cdot 5H_2O$ | 135,3 g |
| $Ca(H_2PO_4)_2 \cdot 2H_2O$ | 172,7 g |
| $Ba(H_2PO_4)_2$ | 2498,7 g |
| $Al(PO_3)_3$ | 1100,0 g |

| | |
|---|---|
| $MgF_2$ | 632,0 g |
| $CaF_2$ | 864,0 g |
| $SrF_2$ | 1644,0 g |
| $AlF_3 \cdot 3H_2O$ | 2455,2 g |
| $BaCO_3$ | 1557,3 g |
| $SrCO_3$ | 886,1 g |
| $KHF_2$ | 30,0 g |

wird gut gemischt und sodann in kleinen Portionen in einen Platintiegel eingelegt, dessen Temperatur konstant bei ca. 880°C solange gehalten wird, bis die Gesamteinwaage eingeschmolzen ist. Das Einlegen dauert ca. 120 Minuten. Anschließend wird die Temperatur innerhalb von 5 Minuten auf ca. 1160°C kontinuierlich erhöht. Ist diese Temperatur erreicht, wird ein Rührer eingesetzt und mit einer Geschwindigkeit von etwa 180 Umdrehungen pro Minute gerührt. Nach einer Rührzeit von ca. 90 Minuten wird die Temperatur auf etwa 950°C zurückgefahren und bei dieser Temperatur die Rührgeschwindigkeit auf ca. 80 Umdrehungen pro Minute zurückgenommen. Bei 750 bis 760°C wird in auf ca. 510°C vorgewärmte Aluminiumformen abgegossen.

Die so erhaltenen optischen Gläser sind schlieren- und blasenfrei sowie chemisch stabil und zu Linsenrohlingen von großen Durchmessern verpreßbar.


## Ansprüche

1. Optisches Fluorphosphatglas auf der Basis von Metaphosphaten und Fluoriden der Erdalkalien und des Aluminiums sowie von Erdalkalioxiden mit Brechzahlen $n_e$ zwischen 1,515 und 1,546, Abbe-Werten $v_e$ zwischen 75,8 und 77,4 sowie positiven anomalen Teildispersionswerten $+ \Delta v_e$ zwischen 14,85 und 15,15, **dadurch gekennzeichnet,** daß es folgende elementare Zusammensetzung aufweist (in Gew.-%) :

| | |
|---|---|
| Mg | 2,4-2,7 |
| Ca | 4,5-4,9 |
| Sr | 15,9-17,6 |
| Ba | 20,2-22,3 |
| Al | 5,6-6,2 |
| P | 8,8-9,7 |
| F | 22,0-24,3 |
| O | 15,7-17,4. |

2. Glas nach Anspruch 1, **dadurch gekennzeichnet,** daß es eine Brechzahl $n_e$ = 1,530, einen Abbe-Wert $v_e$ = 76,6, einen positiven anomalen Teildispersionswert $\Delta v_e$ = + 15 sowie folgende elementare Zusammensetzung aufweist (in Gew.-%) :

| | |
|---|---|
| Mg | 2,6 |
| Ca | 4,7 |
| Sr | 16,8 |
| Ba | 21,2 |
| Al | 5,9 |
| P | 9,22 |
| F | 23,1 |
| O | 16,52. |

3. Glas nach Anspruch 1, **dadurch gekennzeichnet,** daß es eine Brechzahl $n_e$ = 1,5302, einen AbbeWert $v_e$ = 76,57, einen positiven anomalen Teildispersionswert $\Delta v_e$ = + 15,0 sowie folgende elementare Zusammensetzung aufweist (in Gew.-%) :

| | |
|---|---|
| Mg | 2,57 |
| Ca | 4,69 |
| Sr | 16,75 |
| Ba | 21,22 |
| Al | 5,90 |
| P | 9,22 |
| F | 23,13 |
| O | 16,52. |

4. Glas nach einem der Ansprüche 1 bis 3, **dadurch gekennzeichnet,** daß es die folgenden physiko-chemischen Parameter aufweist :

linearer thermischer Ausdehnungskoeffizient

$\alpha 20/300°C$                 $= 14,0-14,3 [10^{-6} \cdot 1/°C]$

EP 0 243 421 B1

Transformationstemperatur = 459-510 [°C]  
spezifisches Gewicht $\varrho$ = 3,7-3,9[g/cm³]  
Knoop-Härte HK = 380-390.

5. Glas nach Anspruch 4, **gekennzeichnet** durch die folgenden Parameter:

$\alpha 20/300°C$ = $14,18 \cdot 10^{-6} \cdot 1/°C$  
Tg = 501°C  
$\varrho$ = 3,78 g/cm³  
HK = 385.

6. Verfahren zur Herstellung eines Glases nach einem der vorhergehenden Ansprüche, **dadurch gekennzeichnet**, daß es aus einem Gemenge erschmolzen wird, welches folgende Zusammensetzung aufweist (in Gew.-%):

$Mg(PO_3)_2$ 0,5-1  
$Ca(PO_3)_2$ 1-2  
$Ba(PO_3)_2$ 21-24  
$Al(PO_3)_3$ 10-12,

wobei der Gesamtgehalt aller Metaphosphate zwischen 33 und 38 beträgt;

$MgF_2$ 6-7  
$CaF_2$ 8-10  
$SrF_2$ 15-18  
$AlF_3$ 14-16,

wobei der Gesamtgehalt aller Fluoride zwischen 43 und 51 beträgt;

BaO 11-13  
SrO 5-7,

wobei der Gesamtgehalt aller Oxide zwischen 16 und 20 beträgt.

7. Verfahren nach Anspruch 6, **dadurch gekennzeichnet**, daß das Gemenge folgende Zusammensetzung aufweist (in Gew.-%):

$Mg(PO_3)_2$ 0,8-0,9  
$Ca(PO_3)_2$ 1,2-1,4  
$Ba(PO_3)_2$ 21,2-23,4  
$Al(PO_3)_3$ 10,5-11,6  
$MgF_2$ 6,0-6,6  
$CaF_2$ 8,2-9,1  
$SrF_2$ 15,6-17,3  
$AlF_3$ 14,1-15,6  
BaO 11,5-12,7  
SrO 5,9-6,6.

8. Verfahren nach Anspruch 7, **dadurch gekennzeichnet**; daß das Gemenge folgende Zusammensetzung aufweist (in Gew.-%):

$Mg(PO_3)_2$ 0,80  
$Ca(PO_3)_2$ 1,27  
$Ba(PO_3)_2$ 22,31  
$Al(PO_3)_3$ 11,00  
$MgF_2$ 6,32  
$CaF_2$ 8,64  
$SrF_2$ 16,44  
$AlF_3$ 14,88  
BaO 12,10  
SrO 6,24.

9. Verfahren zur Herstellung eines Glases nach mindestens einem der vorhergehenden Ansprüche, **dadurch gekennzeichnet**, daß es nach den folgenden Schritten abläuft:

a) Erhitzen des Ausgangsgemenges bei 860-900°C innerhalb einer Zeit von 100-130 Minuten,  
b) Erhöhen der Temperatur innerhalb von 5 Minuten auf 1150-1170°C,  
c) nachfolgendes Rühren innerhalb einer Zeit von 60 bis 90 Minuten,  
d) Absenken der Schmelztemperatur auf 930-970°C bei reduzierter Rührgeschwindigkeit,  
e) Abgießen bei einer Temperatur von 750 bis 760°C in auf ca. 510°C vorgewärmte Formen.

10. Verfahren nach Anspruch 9, **dadurch gekennzeichnet**, daß es nach den folgenden Schritten abläuft:

a) Erhitzen des Ausgangsgemenges im Platintiegel bei 880°C innerhalb einer Zeit von 120 Minuten,  
b) Erhöhen der Temperatur innerhalb von 5 Minuten auf 1160°C,

5

c) nachfolgendes Rühren mit einer Rührer-Geschwindigkeit von 180 Umdrehungen pro Minute innerhalb einer Zeit von 90 Minuten,

d) Absenken der Schmelztemperatur auf 950°C und Reduzieren der Rührgeschwindigkeit auf 80 Umdrehungen pro Minute ;

e) Abgießen bei einer Temperatur von 750 bis 760°C in auf 510°C vorgewärmte Aluminiumformen.

**Claims**

1. Optical fluorophosphate glass on the base of metaphosphates and fluorides of the alkaline earths and of the aluminium as well as of alkaline earth oxides with refractive indices $n_e$ between 1.515 and 1.546, Abbe values $v_e$ between 75.8 and 77.4 as well as positive anomalous partial dispersion values $+ \Delta v_e$ between 14.85 and 15.5, characterised thereby, that it displays the following elemental composition (in % by weight) :

| | |
|---|---|
| Mg | 2.4-2.7 |
| Ca | 4.5-4.9 |
| Sr | 15.9-17.6 |
| Ba | 20.2-22.3 |
| Al | 5.6-6.2 |
| P | 8.8-9.7 |
| F | 22.0-24.3 |
| O | 15.7-17.4 |

2. Glass according to claim 1, characterised thereby, that it displays a refractive index $n_e$ = 1.530, an Abbe value $v_e$ = 76.6, a positive anomalous partial dispersion value $\Delta v_e$ = + 15 as well as the following elemental composition (in % by weight) :

| | |
|---|---|
| Mg | 2. 6 |
| Ca | 4.7 |
| Sr | 16.8 |
| Ba | 21.2 |
| A | 15.9 |
| P | 9.2 |
| F | 23.1 |
| O | 16.5 |

3. Glass according to claim 1, characterised thereby, that it displays a refractive index $n_e$ = 1.5302, an Abbe value $v_e$ = 76.57, a positive anomalous partial dispersion $\Delta v_e$ = + 15.0 as well as the following elemental composition (in % by weight) :

| | |
|---|---|
| Mg | 2.57 |
| Ca | 4.69 |
| Sr | 16.75 |
| Ba | 21.22 |
| Al | 5.90 |
| P | 9.22 |
| F | 23.13 |
| O | 16.52 |

4. Glass according to one of the claims 1 to 3, characterised thereby, that it displays the following physio-chemical parameters :

| | |
|---|---|
| linear thermal co-efficient of expansion $\alpha$20/300°C | = 14.0 to 14.3 [$10^{-6} \cdot 1/°C$] |
| transformation temperature | = 459 to 510 [°C] |
| specific weight $\varrho$ | = 3.7 to 3.9 [g/cm³] |
| Knoop hardness | = 300 to 390. |

5. Glass according to claim 4, characterised by the following parameters :

| | |
|---|---|
| $\alpha$20/300°C | =14.18 $\cdot 10^{-6} \cdot 1/°C$ |
| Tg | = 501°C |
| $\varrho$ | = 3.78 g/cm³ |
| HK | = 385 |

6. Method for the production of a glass according to one of the preceding claims, characterised thereby, that it is molten from a frit which displays the following composition (in % by weight) :

Mg(PO₃)₂   0.5-1

Ca(PO₃)₂ 1-2
Ba(PO₃)₂ 21-24
Al(PO₃)₃ 10-12

wherein the total content of all metaphosphates amounts to between 33 and 38 ;

MgF₂ 6-7
CaF₂ 8-10
SrF₂ 15-18

wherein the total content of all fluorides amounts to between 43 and 51 ;

BaO 11-13
SrO 5-7

wherein the total content of all oxides amounts to between 16 and 20.

7. Method according to claim 6, characterised thereby, that the frit displays the following composition (in % by weight) :

Mg(PO₃)₂ 0.8-0.9
Ca(PO₃)₂ 1.2-1.4
Ba(PO₃)₂ 21.2-23.4
Al(PO₃)₃ 10.5-11.6
MgF₂ 6.0-6.6
CaF₂ 8.2-9.1
SrF₂ 15.6-17.3
AlF₃ 14.1-15.6
BaO 11.5-12.7
SrO 5.9-6.6.

8. Method according to claim 7, characterised thereby, that the frit displays the following composition (in % by weight) :

Mg(PO₃)₂ 0.80
Ca(PO₃)₂ 1.27
Ba(PO₃)₂ 22.31
Al(PO₃)₃ 11.00
MgF₂ 6.32
CaF₂ 8.64
SrF₂ 16.44
AlF₃ 14.88
BaO 12.10
SrO 6.24.

9. Method for the production of a glass according to at least one of the preceding claims, characterised thereby, that it proceeds according to the following steps :

a) heating of the initial frit at 860 to 900°C within a time of 100 to 130 minutes,

b) increasing the temperature within 5 minutes to 1150 to 1170°C,

c) subsequent stirring within a time of 60 to 90 minutes,

d) lowering of the melt temperature to 930 to 970°C at reduced stirring speed and

e) pouring at a temperature of 750 to 760°C into moulds preheated to about 510°C.

10. Method according to claim 9, characterised thereby, that the it proceeds according to the following steps :

a) heating of the initial frit in a platinum crucible at 880° within a time of 120 minutes,

b) increasing the temperature within 5 minutes to 1160°C,

c) subsequent stirring within a time of 90 minutes at a stirring speed of 180 revolutions per minute,

d) lowering of the melt temperature to 950°C and lowering of the stirring speed to 80 revolutions per minute and

e) pouring at a temperature of 750 to 760°C into aluminium moulds preheated to 510°C.

## Revendications

1. Verre optique au fluorophosphate à base de métaphosphates et fluorures alcalino-terreux et d'aluminium ainsi que d'oxydes alcalino-terreux ayant des indices de réfraction $n_e$ compris entre 1,515 et 1,546, des valeurs de Abbe $v_e$ comprises entre 75,8 et 77,4 ainsi que des valeurs de dispersion partielle positive anomale $+ \Delta v_e$ comprises entre 14,85 et 15,15, caractérisé en ce qu'il présente la composition élémentaire suivante (en % en

poids) :

| | |
|---|---|
| Mg | 2,4-2,7 |
| Ca | 4,5-4,9 |
| Sr | 15,9-17,6 |
| Ba | 20,2-22,3 |
| Al | 5,6-6,2 |
| P | 8,8-9,7 |
| F | 22,0-24,3 |
| O | 15,7-17,4. |

2. Verre selon la revendication 1, caractérisé en ce qu'il présente un indice de réfraction $n_e = 1,530$, une valeur de Abbe $v_e = 76,6$, une valeur de dispersion partielle positive anomale $\Delta v_e = + 15$ ainsi que la composition élémentaire suivante (en % en poids) :

| | |
|---|---|
| Mg | 2,6 |
| Ca | 4,7 |
| Sr | 16,8 |
| Ba | 21,2 |
| Al | 5,9 |
| P | 9,2 |
| F | 23,1 |
| O | 16,5 |

3. Verre selon la revendication 1, caractérisé en ce qu'il présente un indice de réfraction $n_e = 1,5302$, une valeur de Abbe $v_e = 76,57$, une valeur de dispersion partielle positive anomale $\Delta v_e = + 15,0$ ainsi que la composition élémentaire suivante (en % en poids) :

| | |
|---|---|
| Mg | 2,57 |
| Ca | 4,69 |
| Sr | 16,75 |
| Ba | 21,22 |
| Al | 5,90 |
| P | 9,22 |
| F | 23,13 |
| O | 16,52. |

4. Verre selon l'une quelconque des revendications 1 à 3, caractérisé en ce qu'il présente les paramètres physico-chimiques qui suivent :

| | |
|---|---|
| coefficient de dilatation thermique linéaire $\alpha 20/300°C$ | = 14,0-14,3 $[10^{-6}\ 1/°C]$ |
| température de transformation | = 459-510 [°C] |
| poids spécifique $\varphi$ | = 3,7-3,9 $[g/cm^3]$ |
| Dureté de Knoop HK | = 380-390. |

5. Verre selon la revendication 4, caractérisé par les paramètres suivants :

| | |
|---|---|
| $\alpha 20/300°C$ | = 14,18 · $10^{-6}$ · 1/°C |
| Tg | = 501°C |
| $\varphi$ | = 3,78 $g/cm^3$ |
| HK | = 385. |

6. Procédé de fabrication d'un verre selon l'une quelconque des revendications précédentes, caractérisé en ce qu'il est élaboré d'un mélange qui présente la composition suivante (en % en poids) :

| | |
|---|---|
| $Mg(PO_3)_2$ | 0,5-1 |
| $Ca(PO_3)_2$ | 1-2 |
| $Ba(PO_3)_2$ | 21-24 |
| $Al(PO_3)_3$ | 10-12, |

la teneur totale de tous les métaphosphates étant comprise entre 33 et 38 ;

| | |
|---|---|
| $MgF_2$ | 6-7 |
| $CaF_2$ | 8-10 |
| $SrF_2$ | 15-18 |
| $AlF_3$ | 14-16, |

la teneur totale de tous les fluorures étant comprise entre 43 et 51 ;

| | |
|---|---|
| BaO | 11-13 |
| SrO | 5-7, |

la teneur totale de tous les oxydes étant comprise entre 16 et 20.

7. Procédé selon la revendication 6, caractérisé en ce que le mélange présente la composition suivante (en % en poids) :

| | |
|---|---|
| Mg(PO$_3$)$_2$ | 0,8-0,9 |
| Ca(PO$_3$)$_2$ | 1,2-1,4 |
| Ba(PO$_3$)$_2$ | 21,2-23,4 |
| Al(PO$_3$)$_3$ | 10,5-11,6 |
| MgF$_2$ | 6,0-6,6 |
| CaF$_2$ | 8,2-9,1 |
| SrF$_2$ | 15,6-17,3 |
| AlF$_3$ | 14,1-15,6 |
| BaO | 11,5-12,7 |
| SrO | 5,9-6,6. |

8. Procédé selon la revendication 7, caractérisé en ce que le mélange présente la composition suivante (en % en poids) :

| | |
|---|---|
| Mg(PO$_3$)$_2$ | 0,80 |
| Ca(PO$_3$)$_2$ | 1,27 |
| Ba(PO$_3$)$_2$ | 22,31 |
| Al(PO$_3$)$_3$ | 11,00 |
| MgF$_2$ | 6,32 |
| CaF$_2$ | 8,64 |
| SrF$_2$ | 16,44 |
| AlF$_3$ | 14,88 |
| BaO | 12,10 |
| SrO | 6,24 |

9. Procédé de fabrication d'un verre selon l'une quelconque des revendications précédentes, caractérisé en ce qu'il se déroule selon les étapes suivantes :

a) chauffer le mélange de départ entre 860 et 900°C en un temps de 100 à 130 minutes,

b) augmenter la température en 5 minutes jusqu'à 1150-1170°C,

c) agiter ensuite pendant un temps de 60 à 90 minutes,

d) diminuer la température du bain à 930-970°C avec vitesse réduite d'agitation,

e) verser à une température de 750 à 760°C dans des moules préchauffés à environ 510°C.

10. Procédé selon la revendication 9, caractérisé en ce qu'il se déroule selon les étapes suivantes :

a) chauffer le mélange de départ dans un creuset en platine à 880°C en 120 minutes,

b) augmenter la température en 5 minutes jusqu'à 1160°C,

c) agiter ensuite avec une vitesse de l'agitateur de 180 tours par minute pendant un temps de 90 minutes,

d) diminuer la température du bain à 950°C et réduire la vitesse d'agitation à 80 tours par minute,

e) verser à une température de 750 à 760°C dans des moules en aluminium préchauffés à 510°C.